(19) Europäisches Patentamt
European Patent Office
Office européen des brevets

(11) **EP 2 908 276 A1**

## (12) EUROPEAN PATENT APPLICATION

(43) Date of publication:
**19.08.2015 Bulletin 2015/34**

(51) Int Cl.:
***G06Q 10/08*** *(2012.01)*

(21) Application number: **14305208.2**

(22) Date of filing: **14.02.2014**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **HMY Group
89470 Moneteau (FR)**

(72) Inventors:
• **Lognon, Laurent
89000 Saint Georges sur Baulche (FR)**
• **Berthaud, Philippe
89700 Tonnerre (FR)**

(74) Representative: **Santarelli
49, avenue des Champs-Elysées
75008 Paris (FR)**

(54) **Management of stocks of items stored in pieces of furniture in facilities**

(57)     A method of managing stocks of items stored in pieces of furniture in facilities, the method comprising the following steps:
- determining first numbers of items disposed in each piece of furniture, based on a detection, by antennas of each piece of furniture, of radio frequency tags in their respective vicinities,
- determining a total second number of items stored in the facility based on said first numbers,
- transmitting stock information to a stock management system for supplying said pieces of furniture, said stock information enabling said stock management system to trigger supply of the facilities for meeting respective needs of each facility for items.

Fig. 9

**Description**

FIELD OF THE INVENTION

The present invention generally relates to the automatic stock management in facilities storing items.
In particular, the present invention relates to the management of stocks of items directly disposed in pieces of furniture in said facilities, in order to organise the provisioning.

BACKGROUND OF THE INVENTION

In retail stores and also in supermarkets, brands can place pieces of furniture containing manufactured goods to be sold to customers. The brand directly provides the store or the supermarket with the goods and also the pieces of furniture (typically a gondola).
Generally, the brand does not have stocks within the store and the only goods it has available at the store are those presented in the piece of furniture.
Therefore, in order to avoid inventory shortage, the brand has to regularly send sales representatives to check the availability of the goods in each store and to provision the piece of furniture in case of shortage. Therefore, each representative must carry with him a certain quantity of goods, which can only be determined, based on estimations.
Therefore, it may happen that the pieces of furniture are not provisioned correctly or that the representative goes to the store whereas it was not necessary.
Thanks to the low cost of passive RFID tags (Radio Frequency Identification tags), RFID systems are used in many different applications including, in particular, retail applications for managing inventory. In such applications, an RFID reader comprising an antenna interrogates RFID tags located in the vicinity of the reader's antenna.
The kind of information returned by an RFID tag depends on its type. However, regarding retail applications, the data read on an RFID tag generally relates to the identification of the item associated with the RFID tag. Such identification may comprise an identifier of the item, a description of the item, an identifier of the manufacturer of the item, and the like. One of the main advantages of the use of RFID technology over other technologies like barcode technology lies in its capacity to interrogate several RFID tags simultaneously that may not be in direct line of sight of the reader.
It is noted that if a main object of RFID tags is directed to identification and tracking of items, recent applications use RFID tags for their localization (that is to say, for identifying the location of the items). For the sake of illustration, there exist solutions based on RFID tags for localizing an object such as a wallet or to help in controlling movements of a robot.
Such localization applications of RFID tags can be usefully implemented in facilities, in particular in retail areas, for example to help customers localize desired items, to help storekeepers in supplying gondolas and to verify that each item is at its correct place.
Generally speaking, some existing solutions for localizing RFID tags are based on Global Positioning System (GPS) modules that are embedded within RFID readers (that can be mobile or not). Accordingly, after detecting an RFID tag, an RFID reader can obtain identification data from the RFID tag and localization data from a GPS module. These data may be combined so as to provide RFID tag identification and position data to a central processing system. However, GPS based solutions are not adapted for indoor use because of signal attenuation. Moreover, GPS solutions are not adapted to accurately determine the elevation of an item.
According to other solutions, the coordinates of the RFID tags are stored in the latter. To that end, an RFID writer having positioning means or having means for determining the current or future positions of the RFID tags is used to program the tags. Such a solution presents several drawbacks among which is storage of the coordinates of each RFID tag in its memory.
Other solutions for localizing RFID tags use networks of active RFID tags whose locations are known by an RFID reader. Determining distances between some of the active RFID tags and a passive tag based on response time makes it possible to determine the position of the latter. Again, such a solution presents drawbacks among which are determining the positions of the active RFID tags, requiring electrical power for the active RFID tags, and integration difficulties resulting, in particular, from electromagnetic signal shielding due to the use of metallic elements (e.g. metal shelving).
Still other solutions are based on triangulation or trilateration using received signal strength, round-trip time-of-flight, time-difference-of-arrival, and/or phase-difference-of-arrival. However, although these solutions may enable accurate positioning measurements to be obtained, they are difficult to implement in a real environment.
In addition, although the use of RFID tags may present numerous advantages over traditional technologies, there remain some drawbacks. In particular, RFID readers are generally expensive and the communication range allowing communication between an RFID reader and a low cost RFID tag is limited.

To cope with such problems, several antennas can be connected to a single RFID reader via a multiplexer which is used to select the antenna to be used.

The antennas used for retail applications are typically patch antennas that is to say planar resonant antennas for narrow-band microwave wireless links that require semi-hemispherical coverage. They are often used as elements for an array. It is noted that most retail applications are based upon UHF *(Ultra High Frequency)* RFID tags whose signal frequency is comprised between 860 and 960 MHz.

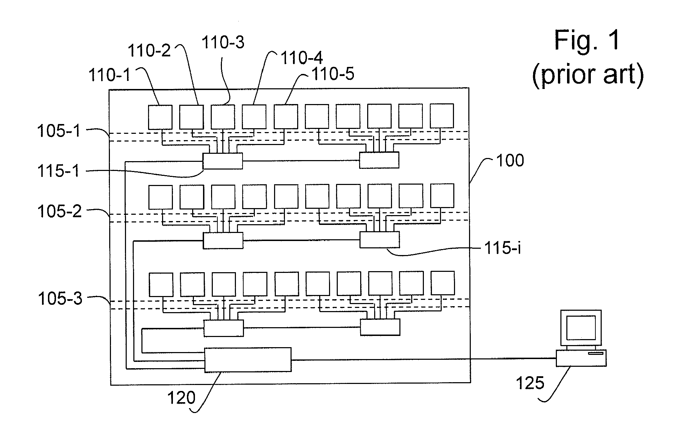

Figure 1 illustrates schematically a back view of a back panel 100 of a shelving structure comprising horizontal shelves 105-1 to 105-3 for CDs, DVDs, books, or the like. As shown, back panel 100 includes an RFID infrastructure. More precisely, back panel 100 comprises several arrays of antennas, each array of antennas being associated with one multiplexer allowing the selection of an antenna in the array. For example, each of the antennas 110-1 to 110-5 is connected to the multiplexer 115-1. Similarly, antennas are connected to the multiplexer 115-1, as shown.

The multiplexers to which antennas are connected, for example multiplexers 115-1 and 115-i, are themselves connected to another multiplexer 120. In turn, multiplexer 120 is typically connected to an electronic circuit 125 comprising a microprocessor, for example a personal computer. Accordingly, the electronic circuit 125 can select and activate one antenna amongst all the antennas of the back panel 100 by controlling paths established by the multiplexers. The activation of an antenna allows electronic tags located in its vicinity to be read. For the sake of illustration, the activation of antenna 110-3 allows access to the information stored in the RFID tags attached to the items located in front of the antenna 110-3 (in front of the back panel 100) on the horizontal shelf 105-1.

By knowing the position of a used antenna, it is possible to determine approximately the position of a detected tag.

Therefore, the use of RFID tags made it possible to have smart gondolas that enable to have knowledge of the stocks disposed therein.

However, there is still a need for better organizing the provisioning of the gondolas in retail stores.

The present invention lies within this context.

SUMMARY OF THE INVENTION

According to a first aspect of the invention, there is provided a method of managing stocks of items stored in pieces of furniture in facilities, wherein:

- a respective radio frequency tag is attached to each of said items,
- said items are disposed in a set of pieces of furniture in each facility,
- each of said set of pieces furniture is equipped with a plurality of antennas connected to at least one processing system comprising a radio frequency tag reader, the method comprising the following steps:

- determining first numbers of items disposed in each piece of furniture, based on a detection, by the antennas of each piece of furniture, of radio frequency tags in their respective vicinities,
- determining a total second number of items stored in the facility based on said first numbers,
- transmitting stock information to a stock management system for supplying said pieces of furniture, said stock information enabling said stock management system to trigger supply of the facilities for meeting respective needs of each facility for items.

For example, said first and/or second numbers are determined in real-time.

According to embodiments, said first and/or second numbers are regularly determined.

The method may further comprise a step of receiving a request for stock information from said stock management system, and said stock information may be transmitted in response to said request.

For example, said stock information is regularly transmitted to said stock management system.

For example, said stock information is transmitted over a public telecommunication network.

According to embodiments, said first and second numbers are determined for types of items, and the stock information enables to trigger supply of the facilities for meeting respective needs of each facility for items

For example, said stock information comprises first localization information for localizing the items in the corresponding piece of furniture.

For example, said stock information comprises second localization information for localizing the facility from which it originates.

According to embodiments, said step of determining said first number is performed by each local processing system associated with a set of pieces of furniture.

For example, said step of determining said second total number and/ or said step of transmitting said stock information is performed, in each facility, by a central processing unit to which are connected each processing system.

It is another object of the present invention to provide a computer program comprising instructions for carrying out each step of the method described above when the program is loaded and executed by a programmable apparatus. The advantages provided by such a computer program are similar to those described above.

It is another object of the present invention to provide a system configured to perform a method as described above.

BRIEF DESCRIPTION OF THE DRAWINGS

Further advantages of the present invention will become apparent to those skilled in the art upon examination of the drawings and detailed description. It is intended that any additional advantages be incorporated herein.

Figure 1 illustrates schematically a back view of a back panel of a shelving structure for CDs, DVDs, books, or the like embedding an RFID infrastructure;

Figure 2 represents schematically a front view of a gondola comprising three horizontal shelves, embedding an RFID infrastructure;

Figure 3 schematically illustrates a top view of the gondola illustrated in Figure 2;

Figure 4 represents schematically a top view of pieces of furniture and RFID electronic elements to illustrate an example of using a single RFID reader and the associated processing means to handle signals received by antennas of several gondolas;

Figure 5, comprising Figures 5a and 5b, illustrates a front view of one of the sets of gondolas illustrated in Figure 4 and an example of representing the physical position of a detection area in a representation of the piece of furniture illustrated in Figure 2, respectively;

Figure 6 illustrates an example of a layout map of pieces of furniture in a facility;

Figure 7 illustrates an example of the definition of the positions of the RFID readers associated with the gondola illustrated in Figure 6;

Figure 8, comprising Figures 8a and 8b, illustrates an example of steps carried out in one or several local processing systems and in a central processing system for localizing items in a facility, respectively;

Figure 9 illustrates a general context of implementation of stock management according to embodiments;

Figure 10 illustrates a list of facilities to be provided with items, generated according to embodiments;

Figure 11 is a flowchart of steps of a method of managing stock according to embodiments.

DETAILED DESCRIPTION OF EMBODIMENTS OF THE INVENTION

According to a particular embodiment of the invention, a central computing system of a facility is connected to several local processing systems. Each local processing system comprises at least one electronic tag reader that is connected to several antennas that are mounted within pieces of furniture. The relative positions of the antennas within the pieces of furniture are known or can be obtained by the corresponding local processing system so that an antenna can be localized for example as a function of the multiplexer or switches used to activate the antenna and according to a predetermined setting.

In addition, the central computing system can access a layout mapping of the pieces of furniture in the facility.

Therefore, combining information relating to the mapping of the pieces of furniture within a facility with information relating to the position of the antennas within the pieces of furniture and information relating to an antenna used to detect an RFID tag makes it possible to determine the location of the RFID tag in the facility and therefore the position in the facility of the item to which that RFID is attached.

According to a particular embodiment, patch antennas are used to interrogate RFID tags of the UHF type whose signal frequency is approximately equal to 860 MHz or to 960 MHz. The patch antenna structure is designed so as to minimize the amount of cabling and the number of UHF connectors.

To reduce cost, to make easy the implementation of the RFID system, and to optimize antenna density, parts of the furniture can be used as elements of the patch antennas. More precisely, parts of the furniture comprising parts of the RFID system are preconfigured as pre-cabled modules so as to reduce the number of connexions to make, in particular connexions for RF and control signals, when retail furniture is to be installed on a retail site.

It is noted that positioning patch antennas, related feedlines, and other required electronic components in furniture typically depends, in particular, on the type of furniture to be installed and the type and size of the items to be presented in the furniture. Accordingly, preconfigured modules are determined so as to be as much as possible reusable.

In a particular embodiment, pieces of furniture embedding an RFID infrastructure comprise a visible surface, for example the front face of the back panel, and a hidden surface such as the back face of the back panel. The back panel, made of a conductor material such as sheet metal, is used as the ground electrode of the patch antenna. The radiation electrode of the patch antenna is arranged in front of the back panel while the feedlines are arranged on the other side of the back panel, each radiation electrode being coupled with a feedline, for example with a probe feed arranged in a hole of the back panel. It is noted that other types of coupling can be used. For example, radiation electrodes can be coupled with feedlines according to a slot-coupling scheme.

Each feedline is connected to a multiplexer which is configured to select at most one of the radiation electrodes to which it is connected. Several multiplexers can be used in the same piece of furniture. In such a case, all the multiplexers connected to the radiation electrodes are advantageously connected to each other so as to transmit RF and control signals.

For the sake of illustration, the radiation electrodes can be made of aluminium, austenitic stainless steel, brass, copper, or more generally any nonmagnetic material that is a good electrical conductor. Each radiation electrode can be a square device of 160 x 160 millimetres or less and of one millimetre thick or less.

The radiation electrodes may be spaced apart by 160 to 300 millimetres, for example 266 millimetres. In the given example, the distance between radiation electrodes and the back panel is typically a few millimetres, for example 2 millimetres.

Examples of such arrangements are disclosed in patent applications EP 2 597 595, EP 2 597 594, and EP 2 597 593.

For the sake of illustration, the following description is directed to pieces of furniture of the gondola type. However, the invention applies to any type of furniture.

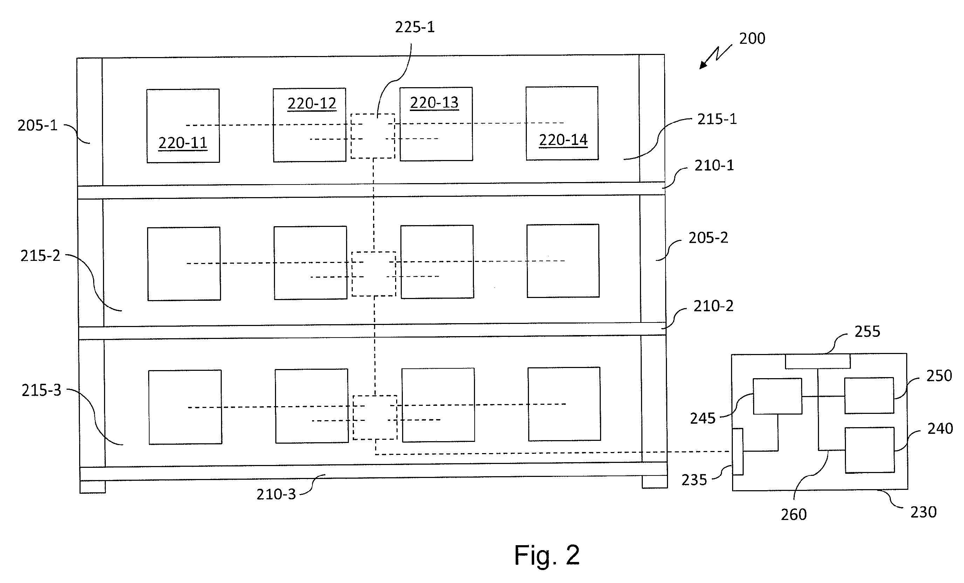

**Figure 2** represents schematically a front view of a piece of furniture 200 of the double-side gondola type comprising two vertical upright columns 205-1 and 205-2 as well as horizontal shelves 210-1 to 210-3 on a first side, horizontal shelves 210'-1 to 210'-3 on the other side (not visible) and a back panel, embedding an RFID infrastructure.

According to the illustrated example, the piece of furniture 200 comprises pre-cabled modules, denoted 215-1 to 215-3, forming at least a part of the back panel and comprising an array of antennas and a multiplexer for selecting an antenna to be used. For example, pre-cabled module 215-1 comprises antenna radiation electrodes 220-11 to 220-14 and multiplexer 225-1 to which antenna radiation electrodes 220-11 to 220-14 are connected. As illustrated with dashed lines, multiplexer 225-1 is concealed by the back panel.

It is noted that for the sake of clarity, the parts shown in Figure 2 are not represented using a common scale.

As illustrated, radiation electrodes, generically referred to as 220, are visible in front of the back panel. According to a particular example, each radiation electrode is fastened by rivets, screws, or the like. According to a particular embodiment, one of the latter can be used as a probe feed. Each radiation electrode, in combination with the other parts of the corresponding patch antenna, is able to read the content of electronic tags located in its vicinity, typically in front of it (according to its radiation pattern).

To be operable, the multiplexers of the pre-cabled modules of the piece of furniture 200 are connected to a local processing system 230 via a first communication interface 235. The latter typically comprises a mother board 240 having a central processing unit (CPU), which is connected to an RFID reader 245, a storage means 250 (e.g., hard drive, solid-state drive, flash memory, or the like) and a second communication interface 255. Mother board 240 is, for example, a standard personal computer (PC) mother board. Communication interface 255 can be, for example, of the Ethernet or of the WiFi type. It allows local processing system 230 to receive data from and to transmit data to a central processing system. Local processing system 230 can be connected to one or more pieces of furniture, allowing selection of each antenna of the latter.

According to the given example, mother board 240, RFID reader 245, storage means 250, and second communication interface 255 are connected to each other via communication bus 260.

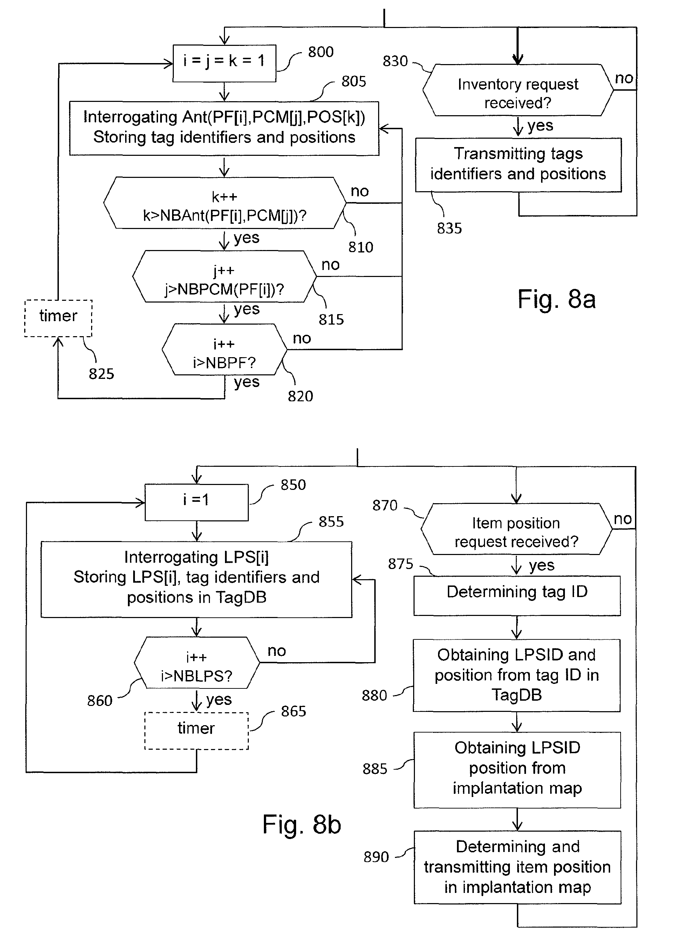

Local processing system 230 is configured for executing a computer program such as a computer program carrying out the steps described by reference to Figure 8a.

As illustrated, RFID reader 245 is connected to a first pre-cabled module 215-3 which is in turn connected to a second pre-cabled module 215-2 and so on so that each pre-cabled module is connected to the neighbouring pre-cabled module. A same serial connection scheme is advantageously used when RFID reader 245 is connected to several pieces of furniture.

According to a particular embodiment, an RF signal link of RFID reader 245 is connected to an RF signal up-going link of the multiplexer ($RF\_up$) of the first pre-cabled module (215-3), an RF signal down-going link of the multiplexer ($RF\_down$) of the first pre-cabled module (215-3) is connected to an RF signal up-going link of the multiplexer of the second pre-cabled module (215-2), and so on.

Likewise, control signal links of RFID reader 245 are connected to a control signal up-going links of the multiplexer of the first pre-cabled module (215-3), control signal down-going links of the multiplexer of the first pre-cabled module (215-3) are connected to control signal up-going links of the multiplexer of the second module (215-2), and so on.

The RF connexions are preferably established by using UHF coaxial cables while control signal (and power) connexions are preferably established by using ribbon cables. Connectors, preferably keyed connectors, can be used to establish such connexions.

According to a particular embodiment, the multiplexer of a pre-cabled module comprises the same number of two-state UHF switches as the number of patch antennas that the pre-cabled module comprises. In this embodiment, each two-state UHF switch can be controlled by a latch, for example a D flip-flop. It is reminded here that the input (D) of a D flip-flop is copied to its output (*Q*) on clock (*Clk*) rising edges while a reset signal *(rst)* is used to set its output to the zero logical state.

Still according to a particular embodiment, each multiplexer can be connected to radiation electrodes by means of probe feeds (crossing a back panel) and rigid microstrip lines. It is noted that the position of a probe feed relative to the corresponding radiation electrode is set as a function of the antenna characteristics. According to a particular example, each probe feed is horizontally centred on the radiation electrode and vertically located around one or two thirds of the radiation electrode's height (allowing two parallel rigid microstrip lines to link a MUX board to two radiation electrodes, as illustrated). Alternatively, the multiplexers can be connected to radiation electrodes by other means, for example using flexible cables. It is also possible to combine several connection means, for example to use rigid microstrip lines to connect some of the radiation electrodes to the multiplexers and flexible cables to connect other radiation electrodes to the multiplexers.

Each multiplexer allows selection of at most one antenna so as to connect the selected radiation electrode to a radio frequency signal up-going link (*RF_up*) or to connect the radio frequency signal up-going link to a radio frequency signal down-going link (*RF_down*) for selecting an antenna connected to the multiplexer considered or to a multiplexer connected to the multiplexer considered.

It is considered herein that an up-going signal, from the perspective of a particular multiplexer, is directed to a link established between a particular multiplexer and a reader to which it is connected (directly or indirectly) while a down-going signal is directed to a link established between the particular multiplexer and another multiplexer, the latter being connected, directly or indirectly, to a reader via the particular multiplexer.

Each multiplexer is controlled by control signals allowing the selection of a given antenna, that is to say a given radiation electrode. The control signals are transmitted from a multiplexer to its neighbour.

According to a particular embodiment, control signal links are bidirectional. If needed, the multiplexer can be powered.

Typically, a multiplexer is a PCB (Printed Circuit Board) embedding one or several standard multiplexer devices and associated electronic circuitry. It is designed so as to be easily connectable to the microstrip lines that feed the radiation electrodes to which the multiplexer has to be connected.

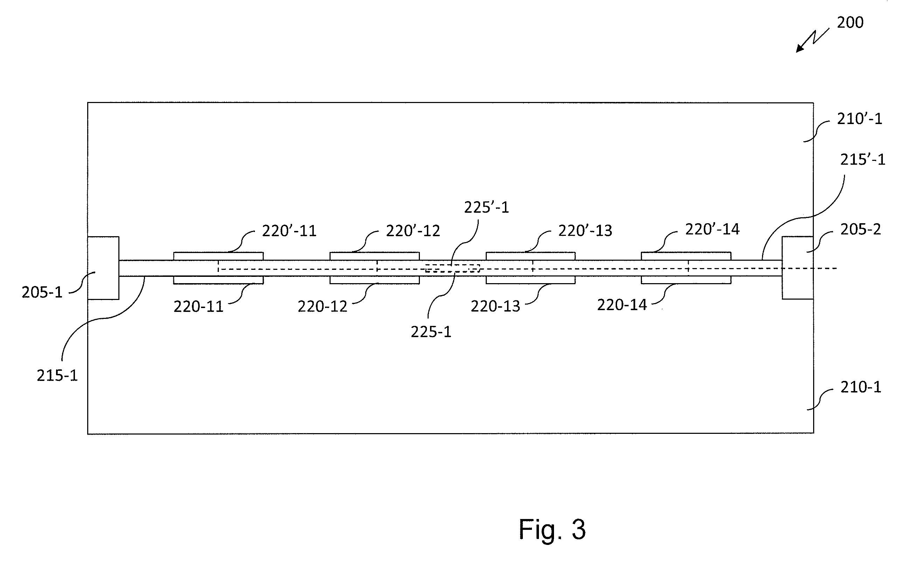

**Figure 3** schematically illustrates a top view of the piece of furniture 200 illustrated in Figure 2.

As illustrated, a first side of the piece of furniture 200 comprises horizontal shelf 210-1, attached to the two vertical upright columns 205-1 and 205-2, and pre-cabled module 215-1 comprising antenna radiation electrodes 220-11 to 220-14 and multiplexer 225-1 to which antenna radiation electrodes 220-11 to 220-14 are connected.

Similarly, the second side of the piece of furniture 200 comprises horizontal shelf 210'-1, attached to the two vertical upright columns 205-1 and 205-2, and pre-cabled module 215'-1 comprising antenna radiation electrodes 220'-11 to 220'-14 and multiplexer 225'-1 to which antenna radiation electrodes 220'-11 to 220'-14 are connected.

The piece of furniture illustrated in Figures 2 and 3 is based on standard items of pieces of furniture, except for the back panel elements that integrate RFID elements. For example, the piece of furniture 200 can be a gondola having a width of 1 330 mm.

The size of the antenna radiation electrodes as well as their relative positions may vary as a function of the types of the product to which are attached the RFID tags to be detected and as a function of the characteristics of the RFID reader used.

Since an important portion of the cost of an RFID system results from the use of one or more RFID readers, it is possible to use one RFID reader in conjunction with several pieces of furniture to reduce significantly the global costs of the system. Moreover, since pieces of furniture, in particular pieces of furniture of the gondola type, are generally organized side by side to optimize space occupation in supermarket, connecting the antennas of several pieces of furniture to one RFID reader is easy and economical.

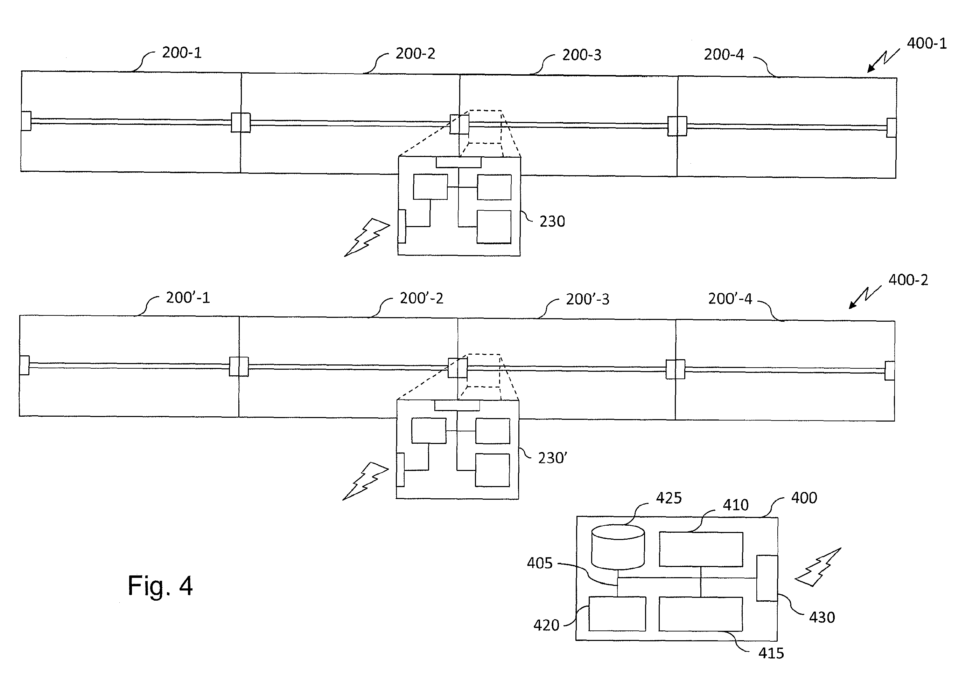

**Figure 4** represents schematically a top view of pieces of furniture and RFID electronic elements to illustrate an example of using a single RFID reader and the associated processing means to handle signals received by antennas of several pieces of furniture, for example several gondolas.

As illustrated, the set 400-1 comprising pieces of furniture 200-1 to 200-4 (represented according to a top view) is associated with local processing system 230. Likewise, the set 400-2 comprising pieces of furniture 200'-1 to 200'-4 is associated with local processing system 230'.

According to a particular embodiment, local processing systems 230 and 230' are arranged within a piece of furniture, as illustrated with dashed lines, for example in a lower position of the third piece of furniture, that is to say approximately in the middle of the sets of pieces of furniture so as to optimize cabling. Indeed, in order to minimize radio frequency loss in the cables used to connect the local processing systems to the multiplexers of the pre-cabled modules, that is to say to minimize the length of these cables, the local processing system is advantageously located in the middle of the pieces of furniture, as illustrated.

Each piece of furniture 200-1 to 200-4 and 200'-1 to 200'-4 is similar to the piece of furniture 200 described by reference to Figures 2 and 3. It comprises several antennas that can be accessed individually thanks to multiplexers.

The multiplexers of the pieces of furniture 200-1 to 200-4 and 200'-1 to 200'-4 are connected, directly or indirectly, to the local processing systems 230 and 230', respectively, so that the local processing system 230 can transmit or receive data selectively via each antenna of the pieces of furniture 200-1 to 200-4 and that the local processing system 230' can transmit or receive data selectively via each antenna of the pieces of furniture 200'-1 to 200'-4.

As mentioned above, local processing systems 230 and 230' comprise a communication interface enabling the local processing systems to receive data from and/or transmit data to a central processing system 400. In addition, each of the local processing systems 230 and 230' comprises a software module capable of selecting each antenna of the pieces of furniture to which the local processing systems are connected, of transmitting interrogation requests and of receiving responses to the interrogation requests, enabling an inventory of RFID tags located in the vicinity of the antennas to be made.

The results of the inventory operations are preferably stored locally in a memory of the local processing systems. According to a particular embodiment, a loop on each antenna of each pre-cabled module of each piece of furniture of a set of pieces of furniture is carried on regular period of time and/or on request.

It is noted that even if only two sets of pieces of furniture are illustrated in Figure 4, more than two sets can be used. Accordingly, more than two local processing systems can receive data from and/or transmit data to a central processing system.

Central processing system 400 can be, for example, a server. It comprises a communication bus 405, a central processing unit 410 capable of executing instructions from program ROM 415 on powering up of the device, and instructions relating to a software application from main memory 420 after the powering up. The main memory 420 is for example of Random Access Memory (RAM) type which functions as a working area of CPU 410 via the communication bus 405, and the memory capacity thereof can be expanded by an optional RAM connected to an expansion port (not illustrated). Instructions relating to the software application may be loaded into the main memory 420 from a hard-disk (HD) 425 or the program ROM 415 for example. Such a software application can be, in particular, a software application carrying out the steps described by reference to Figure 8b.

Reference numeral 430 is a network interface that allows the device 400 to receive data from and/or to transmit data to other devices, in particular to local processing systems 230 and 230'.

It should be pointed out here that, as a variant, the device 400 can consist of one or more dedicated integrated circuits (ASICs).

According to a particular embodiment, the central processing system interrogates the local processing systems at regular intervals of time and/or on request to obtain the results of the inventory operations carried out by the local processing system of each set of pieces of furniture or of some of the sets of pieces of furniture. It is noted that a local processing system can be identified by an identifier such as an Ethernet identifier, an IP (Internet Protocol) address, or similar. The obtained results can be consolidated into one or more databases.

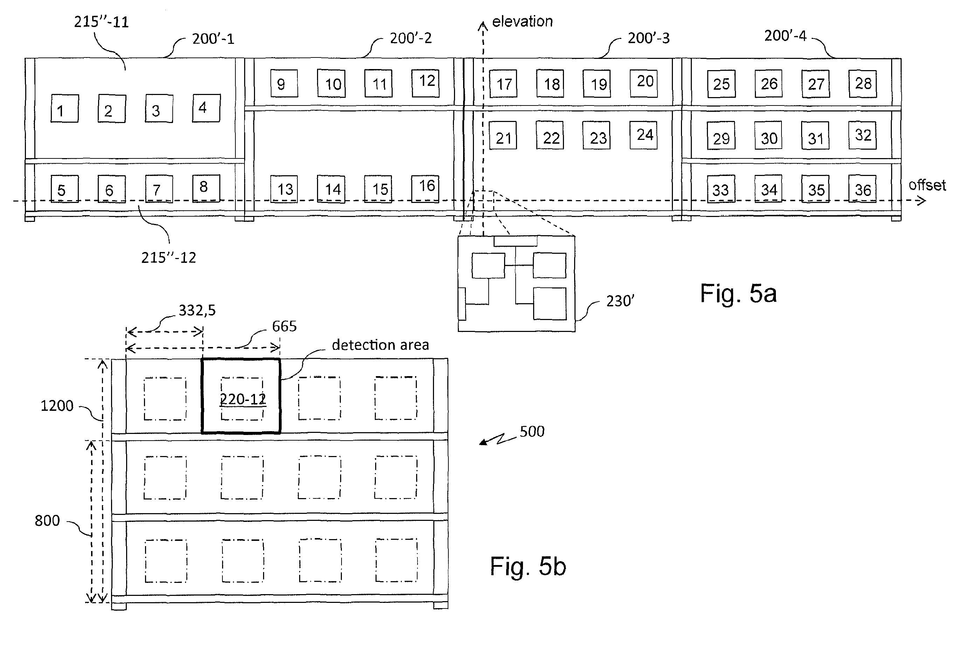

**Figure 5a** illustrates a front view of the set of pieces of furniture 400-2 illustrated in Figure 4.

For the sake of illustration, the configuration of the pieces of furniture of the set 400-2 is different to the one of the set 400-1 of which elements are illustrated in Figure 2 and 3. As illustrated, piece of furniture 200'-1 comprises pre-cabled modules 215"-11 and 215"-12 on the visible side. Likewise, pieces of furniture 200'-2 and 200'-3 each comprise two pre-cabled modules while piece of furniture 200'-4 comprises three pre-cabled modules, on the visible side. Still for the sake of illustration, it is considered that both sides of each piece of furniture are similar to each other.

Each antenna of the pieces of furniture can be identified by its position within its pre-cabled module, the position of the pre-cabled module in the piece of furniture, and the position of the piece of furniture in the set of pieces of furniture. For example, theoretical indicia may be associated with the antennas, as illustrated, to define their positions.

According to a particular embodiment, the position of an antenna is defined by an antenna position within a pre-cabled module, an offset, an elevation (or vertical position), and a side indication:

- the antenna position within a pre-cabled module represents the position of an antenna within the pre-cabled module to which it belongs in relation to a given reference, typically the first left antenna;
- the offset represents the position of the piece of furniture to which belongs the antenna, along an oriented main longitudinal axis of the set of pieces of furniture, in a plane that is to parallel to the ground on which are arranged the pieces of furniture. The reference used to determine the offset can be the position of the RFID reader (i.e. the corresponding local processing system);
- the elevation represents the position of the pre-cabled module to which belongs the antenna. It is defined along an axis that is perpendicular to the ground on which are arranged the pieces of furniture. The reference used to determine the vertical position can be the floor and the elevation can be expressed as a function of the back panel module height (e.g. 400mm) or as a function of the antennas rows such that the elevation of the lower back panel module or antenna row is one, the elevation of the second lower back panel module or antenna row is two, and so on; and
- the side indication defines the side of the piece of furniture on which is located the antenna, typically right (e.g. 0) or left (e.g. 1), in relation to the oriented main longitudinal axis of the set of pieces of furniture.

Table 1 in the Appendix illustrates an example of several positions of the antennas illustrated in Figure 5 (the reference being the position of the RFID reader and the floor).

These positions can be stored in the corresponding local processing system, for example when the corresponding pieces of furniture are arranged within the facility. Storage of the positions can be carried out locally from the local processing systems or remotely using, for example, the central processing system.

It is noted that detection areas associated with antennas can be represented in representations of pieces of furniture, in particular if standard pre-cabled modules are used, for example pre-cabled modules having the same dimensions such as 400mm height and 1330mm width and if the position of the antennas are predetermined, for example arranged on a regular basis. In other words, the logical position of an antenna expressed as a function of a module position within a piece of furniture and of an antenna position within a module can be used to determine the physical position of the antenna within the piece of furniture.

**Figure 5b** illustrates an example of representing the physical position of a detection area in a representation of the piece of furniture illustrated in Figure 2. It is assumed that the pre-cabled modules of the piece of furniture are of the same dimensions and that the antennas are located at predetermined positions (arranged on a regular basis along the modules). For the sake of illustration, the height of the modules is equal to 400 mm and their width is equal to 1330 mm.

As illustrated, the logical position of the detection area associated with antenna 220-12, which corresponds to the second antenna (from the left) of the third module (from the floor), in one side of the piece of furniture, is (2, 3).

Accordingly, the detection area is comprised between the distances equal to 332.5mm (1330 / 4) and 665 mm (1330 / 2) from the left, and between the distances equal to 800 mm (400 x 2) and 1200 mm (400 x 3) from the floor, as represented. To help a customer in localizing an item, for example in the detection area associated with antenna 220-12, the piece of furniture 200 may be represented schematically, for example on a computer display, as illustrated with reference 500 (since the position of the antennas (represented here with dashed lines) are of no use to customers, they are preferably not represented).

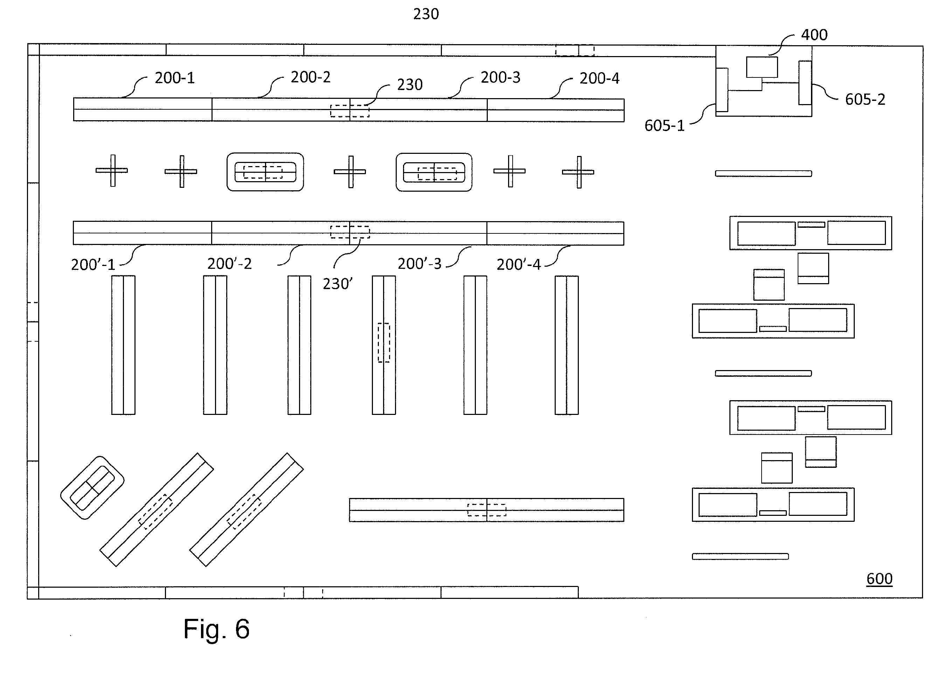

**Figure 6** illustrates an example of a layout map of pieces of furniture in a facility.

The layout map delimits the ground space 600 where pieces of furniture have to be arranged. For the sake of illustration, pieces of furniture comprise, in particular, the set of pieces of furniture 200-1 to 200-4 associated with local processing system 230, the set of pieces of furniture 200'-1 to 200'-4 associated with local processing system 230', and the central processing system 400. As illustrated, the central processing system 400 is connected here to two graphical user interfaces 605-1 and 605-2 enabling a customer to localize an item in the facility.

The layout map comprises representations of other pieces of furniture and of checkouts.

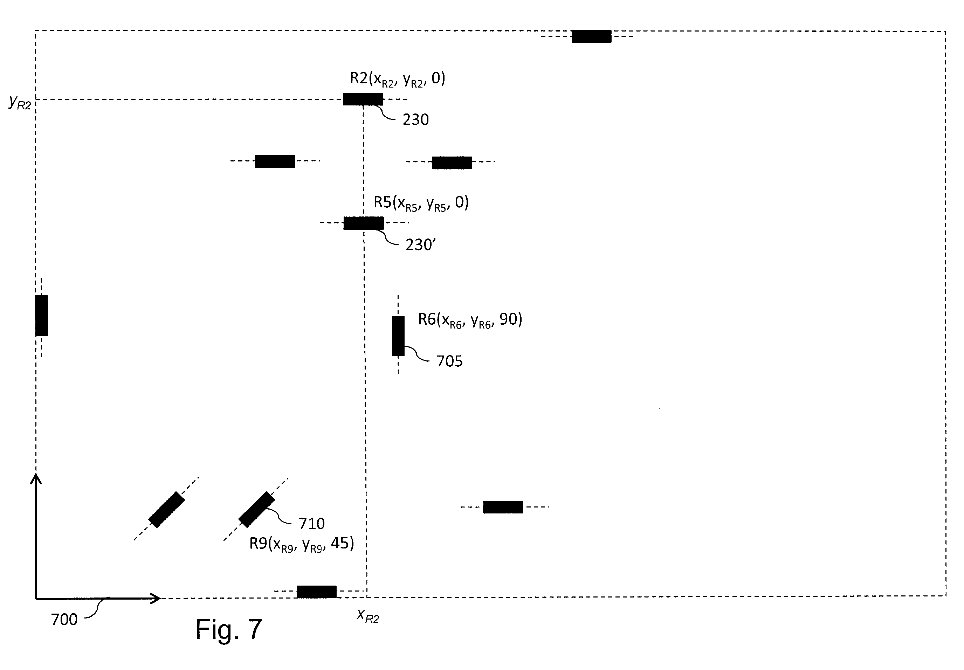

**Figure 7** illustrates an example of the definition of the positions of the RFID readers associated with the pieces of furniture illustrated in Figure 6.

As illustrated, the local processing systems are identified with an identifier Ri and coordinates (x, y, α) where x and y represent the abscissa and the ordinate of the local processing system in a predetermined coordinate system such as coordinate system 700 and α represents the angle between the abscissa axis and the main longitudinal axis of the set of pieces of furniture associated with the local processing system.

Accordingly, local processing system 230 can be identified with identifier R2 and the coordinates $(x_{R2}, y_{R2}, 0)$. Likewise, local processing system 705, associated with pieces of furniture extending along a vertical axis (according to the layout map) can be identified with identifier R6 and the coordinates $(x_{R6}, y_{R6}, 90)$ and local processing system 710, associated with pieces of furniture extending along a diagonal axis (still according to the layout map) can be identified with identifier R9 and the coordinates $(x_{R9}, y_{R9}, 45)$.

Determining the positions of the pieces of furniture in a layout map can be done by an operator, can be done automatically by image analysis of the layout map and pattern recognition, or automatically in a computer-aided design application when the layout map is created.

Knowing the relative position of a local processing system associated with a piece of furniture in view of the position of the latter makes it possible to calculate the position of the local processing system. Again, this can be done by an operator or automatically.

It is noted that the coordinates of local processing systems can be expressed using the 'mks' system or as a function of the size of pieces of furniture which is standardized.

The determined positions of the local processing systems can be stored in a memory of the central processing system. Combining the position of local processing system associated with a piece of furniture as defined in the layout map with the relative position of a specific antenna as a function of the position of the local processing system connected to this specific antenna makes it possible to calculate the position of the antenna in the layout map, that is to say in the facility.

Therefore, the position of an antenna used to localize an item searched for identified as a function of an RFID tag identifier to which it is attached can be displayed in conjunction with a layout map or a facility map to help someone in localizing this item.

**Figure 8,** comprising Figures 8a and 8b, illustrates an example of steps carried out in one or several local processing systems and in a central processing system for localizing items in a facility, respectively.

Turning to Figure 8a which illustrates an example of steps carried out in a local processing system, a first step is directed to initializing indexes *i, j,* and k to the value one (step 800). These indexes are indexes of a piece of furniture associated with the local processing system, of a pre-cabled module in a piece of furniture associated with the local processing system, and of a position of an antenna in a pre-cabled module in a piece of furniture associated with the local processing system, respectively.

The following step (step 805) is directed to identifying all the RFID tags that are located in the vicinity of the antenna located in the piece of furniture (PF) having index i (in the set of pieces of furniture associated with the local processing system carrying out the described steps), in the pre-cabled module (PCM) of that piece of furniture having index *j*, at the position (POS) k of that pre-cabled module. To that end, the multiplexers are set appropriately according to a predetermined table or predetermined rules.

The obtained RFID tag identifiers are stored in relation with their local positions, that is to say, for example, with indexes *i, j,* and k, in a local database, for example in a table such as table 2 given in the Appendix.

Next, index k is incremented by one and a test is performed to determine whether or not the value of this index is greater than $NBAnt(PF[i],PCM[j])$ which represents the number of antennas in the pre-cabled module having index *j* of the piece of furniture having index i in the set of pieces of furniture associated with the local processing system carrying out the described steps (step 810). This value can be common to all pre-cabled modules or determined as a function of a pre-cabled module type.

If the value of index k is not greater than $NBAnt(PF[i],PCM[j])$, step 805 is repeated.

On the contrary, if the value of index k is greater than $NBAnt(PF[i],PCM[j])$, index *j* is incremented by one and a test is performed to determine whether or not the value of this index is greater than $NBPCM(PF[i])$ which represents the number of pre-cabled modules in the piece of furniture having index i in the set of pieces of furniture associated with the local processing system carrying out the described steps (step 815). This value can be common to all pieces of furniture associated with the local processing system carrying out the described steps or determined as a function of a type of pieces of furniture.

If the value of index *j* is not greater than $NBPCM(PF[i])$, step 805 is repeated.

On the contrary, if the value of index *j* is greater than $NBPCM(PF[i])$, index i is incremented by one and a test is performed to determine whether or not the value of this index is greater than $NBPF$ which represents the number pieces of furniture in the set of pieces of furniture associated with the local processing system carrying out the described steps (step 820).

If the value of index i is not greater than $NBPF$, step 805 is repeated. On the contrary, if the value of index i is greater than $NBPF$, the algorithm is branched to step 800 where indexes *i, j,* and k are reinitialized. As illustrated, a programmable timer can be used (step 825) so as to perform an RFID tag inventory on a periodic basis.

In parallel to steps 800 to 825, step 830 is directed to determining whether a request for transmitting an RFID tag inventory, that is to say a list of RFID tag identifiers and associated local positions, has been received. Such a request is typically received from a central processing system.

If such a request is received, the RFID tag identifiers and their local positions as determined in step 805 are transmitted to the system at the origin of the request or to a system that can be identified from the request (step 835). After the RFID tag identifiers and their local positions have been transmitted, the algorithm is branched to step 830 to process a following request.

It is noted that, in response to an inventory request, all the RFID tag identifiers and the associated local positions can be transmitted or, alternatively, only the new identified RFID tag identifiers and their local positions and the RFID tag identifiers that have been previously identified but that are no more detected can be transmitted. The choice can be done as a function of an indication received in the request.

It is also noted that local positions can consist in a set of indexes of a piece of furniture, of a pre-cabled module, and of an antenna. It can also consist in coordinates determined in a predetermined coordinate system, for example a coordinate system centered on the local processing system, in the mks system, or centered on the local processing system, in a system expressed as a function of the size of pieces of furniture that is standardized.

Turning to Figure 8b that illustrates an example of steps carried out in a central processing system, a first step is directed to initialize index *i* to the value one (step 850). Index i is an index of the local processing systems that enable an RFID tag inventory to be carried out.

In a following step (step 855), an inventory request is sent to the local processing system (LPS) having index i. In response to the request, the central processing system receives a set of RFID tag identifiers and local positions that are stored in a tag database (TagDB) along with an identifier of the current selected local processing system (LPS[i]).

An example of the content of the tag database is given in the Appendix (table 3).

Next, index i is incremented by one and a test is performed to determine whether or not the value of this index is greater than $NBLPS$ that represents the number of local processing systems that can carry out an RFID tag inventory (step 860). This value can be determined in a configuration step.

If the value of index i is not greater than *NBLPS,* step 855 is repeated. On the contrary, if index i is greater than *NBLPS,* algorithm is branched to step 850 where index i is reinitialized. As illustrated, a programmable timer can be used (step 865) so as to perform an RFID tag inventory on a periodic basis.

In parallel to steps 850 to 865, step 870 is directed to determining whether a request for determining the position of an item associated with a tag is received. Such a request is typically received from a user via a graphical user's interface or from a remote processing system.

If such a request is received, the RFID tag identifier corresponding to the searched item is obtained (step 875). It can be obtained from a product database that is used, in particular, to establish a link between each product and each tag identifier, the product identifier and the RFID tag identifier being advantageously the same.

Next, using the obtained RFID tag identifier, a local position and a local processing system identifier (LPSID) are obtained from the tag database (step 880).

For example, if the RFID tag identifier is equal to 2431, it can be determined from table 3 of the Appendix that this RFID tag has been identified by the antenna located at the second position of a pre-cabled module also located at the second position of a piece of furniture located at the first position of a set of pieces of furniture associated with the local processing system which identifier is equal to 1.

Next, the position of the local processing system whose identifier corresponds to the obtained local processing system identifier (LPSID) is obtained (step 885). As mentioned above, such a position is typically obtained from a facility layout map.

In a following step, the position of the RFID tag corresponding to the item searched for is determined as a function of the obtained local position and of the position of the local processing system and transmitted to the requester (step 890).

The position of the RFID tag corresponding to the searched item can be determined as follows:

$$x_{item} = x_{LPSID} + \propto x_{ant}$$

$$y_{item} = y_{LPSID} + \beta y_{ant}$$

where ($x_{item}$, $y_{item}$) are the coordinates sought for of the item in the layout map, ($x_{LPSID}$, $y_{LPSID}$) are the coordinates of the local processing system (in the layout map) comprising the antenna from which the RFID tag associated with the searched item has been detected, ($x_{ant}$, $y_{ant}$) are the local coordinates of the antenna from which the RFID tag associated with the searched item has been detected (in a local coordinate system associated with a local processing system), and $\alpha$ and $\beta$ are conversion parameters used to convert the local coordinates of the antenna if they are not expressed using the same system of measurement as that of the layout map.

It is noted that, according to a particular embodiment, particularly when standard pre-cabled modules are used, as described above, the position of an antenna can be expressed using logical values (relative position of an antenna within a module, relative position of a module within a set of modules, relative position of piece of furniture within a set of pieces of furniture, side of piece of furniture), these logical position values being converted into real position values according to the characteristics of the pre-cabled modules and of the pieces of furniture for determining the position of an item in a set of pieces of furniture.

After the position of the searched item has been determined and transmitted, the algorithm is branched to step 870 to process a following request.

It is also noted that other parameters can be used to define the positions of antennas and thus, of an RFID tag and of an item to which the latter is attached.

In particular, a floor level can be added to a table used to store positions of antennas (for example Table 1 in the Appendix) and to a local database used to store antenna positions and identified tag identifiers (for example Table 1 in the Appendix).

Alternatively, a local processing system can be identified with an identifier *Ri* and coordinates (x, *y, level,* α) where level represents the floor level of the local processing system.

Such a floor level parameter is particularly useful for retail areas that are spread over several floor levels.

It is also noted that the granularity of searched positions may be different from the one described above. Indeed, if the searched positions of items can be determined as an RFID antenna level, they can also be determined as a pre-cabled module level, at a side of piece of furniture level, and so on.

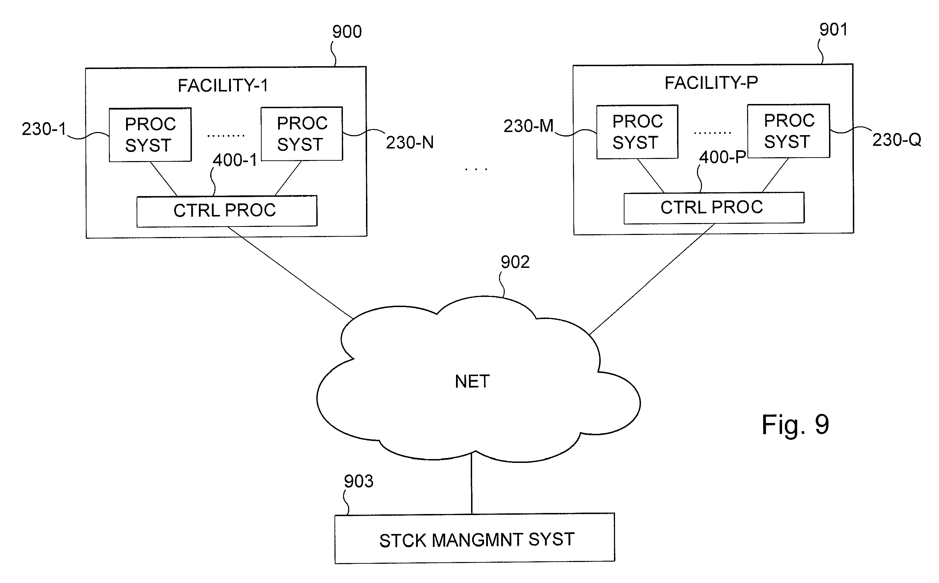

**Figure 9** is an illustration of a context of implementation of embodiments of the invention. This context of implementation may be particularly suited for brand operating marketing campaigns in stores and supermarket by providing smart gondolas with products to be advertised. Generally, such gondolas are directly managed by the brand and not the store or the supermarket in which it is disposed.

A plurality of facilities (FACILITY-1, ..., FACILITY-P) store items in respective pieces of furniture. As already described hereinabove, each set of pieces of furniture has a local processing system to which are connected antennas for detecting radio frequency tags attached to the items. For example, facility 900 (FACILITY-1) comprise a plurality of local processing systems

(PROC SYST) 230-1, .., 230-2 and facility 901(FACILITY-P) comprise a plurality of local processing systems (PROC SYST) 230-M, .., 230-Q).

Within each facility, the local processing systems are connected to a central processing unit (CTRL PROC). Facility 900 comprises a central processing unit 400-1 and facility 901 comprises a central processing unit 400-P.

As already described hereinabove, in each piece of furniture, the antennas are configured to detect radio frequency tags disposed in their respective vicinity. Also, each local processing system of each set of pieces of furniture is configured to determine the localization of each item disposed in the piece of furniture.

Therefore, at any moment, in real-time or upon request, each local processing system may determine the number of items stored in the pieces of furniture of the set to which it corresponds. In case a type of item is associated with each item (such information may be coded within the radio frequency tag), the local processing system may determine the number of items for each type.

Based on the numbers transmitted by the local processing systems, the central processing units may determine in each facility, the total number of items in the facility.

For example, the local processing systems may regularly transmit the number of items they store. The central processing unit may also send requests for obtaining the information.

In order to be able to know, at any moment, the state of the stocks in each facility, the central processing unit of each facility is configured to communicate with a stock management system 903 (STCK MANGMNT SYST), through a communication network 902 (NET). The communication network may be a public network such as the Internet or the telephone network (for example a GSM or 3G network).

Regularly, or upon request, the central processing units may transmit stock information to the stock management system.

For example, the stock information contains a total number of items stored in the facility. The stock information may also contain a number of items needed in the facility (a target number of items to be present in the facility may be defined). The stock information may contain any other information needed by the stock management system for determining how to provide the facility with new items.

According to embodiments, local processing systems may be configured to act as the central processing system. Thus, there is no need for an additional device.

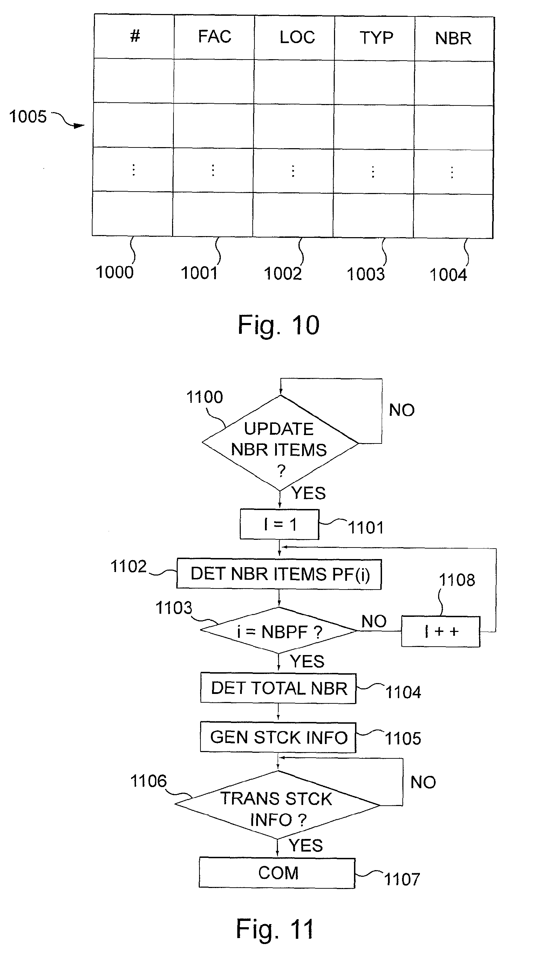

Based on the stock information received from all the facilities, the stock management system may trigger the provision. For example, it may generate a list 1005 of the facilities at which items should be delivered as described with reference to **Figure 10.**

The list comprises a column 1000 indicating the order of delivery. The stock management system may determine, based on the localization of each facility, in what order to deliver the items to them so as to save time. Another column 1001 indicates the identification of the facility, a column 1002 indicates the geographical localization of the facility, a column 1003 indicates the type of items to deliver and a column 1004 the number of items.

A thus, a person provided with the list 1005, and the associated items can go from facility to facility and provision them with the exact number of items needed for filling the pieces of furniture.

As already described above, the localization of the items in the pieces of furniture can be determined by comparing a current inventory with an initial inventory. In order to help the delivery man to fill the pieces of furniture, he may also be provided with indications on the localization of the piece of furniture in the facility and the localization in the piece of furniture where to place the items. This additional information can be provided in the list 1005 or in another document generated by the stock management system.

In case localization information is to be provided to the delivery man, the stock information transmitted by the central processing units may be enriched with data relating to the localization of the items, in addition to the number of items needed or present in the pieces of furniture.

**Figure 11** is a general flowchart of steps of a method performed for managing stocks according to embodiments.

First, it is determined during step 1100 whether the number of items in a facility should be updated. The update may be triggered regularly or upon request. For example, each processing system in each piece of furniture triggers the update. However, the update may also be triggered by the central processing unit of the facility.

If the update has to be performed, next, during step 1101 a variable i is set to 1 and the number of items in piece of furniture PF(i) is determined during step 1102. In case the total number NBPF of pieces of furniture is not reached by variable i (test 1103), the variable is incremented (step 1108) and the number of items is determined in the next pieces of furniture.

In case the total number NBPF is reached, the total number of items in the facility is determined during step 1104. This total number may be calculated by the central processing unit, based on results provided by each processing system in the pieces of furniture.

Based on this total number, stock information is generated by the central processing unit during step 1005. The stock information may contain a variety of data such as a number of items needed, their respective locations in the facility and/or in the pieces of furniture.

Next, it is determined whether the stock information should be transmitted to the stock management system during step 1106. For example, the stock information may be transmitted on a regular basis. The stock information may also be transmitted upon request of the stock management system and a request message may be awaited.

The stock information is then transmitted during step 1107.

In addition to enabling the stock management system to provision the facilities with items, the stock information may be used for aggregating statistical data concerning the sales of products. Thus, the stock management system may know in advance if more or less quantities of particular product should be ordered in the future.

Naturally, in order to satisfy local and specific requirements, a person skilled in the art may apply to the solution described above many modifications and alterations all of which, however, are included within the scope of protection of the invention as defined by the following claims.

## APPENDIX

| Indicia | Pos. / module | Offset | Vert. pos. | Side indic. |
|---|---|---|---|---|
| 1 | 1 | -2 | 2 | 0 |
| 2 | 2 | -2 | 2 | 0 |
| 3 | 3 | -2 | 2 | 0 |
| 4 | 4 | -2 | 2 | 0 |
| 5 | 1 | -2 | 1 | 0 |
| ... | | | | |
| 11 | 3 | -1 | 2 | 0 |
| ... | | | | |
| 27 | 3 | 2 | 3 | 0 |
| ... | | | | |
| 30 | 2 | 2 | 2 | 0 |
| ... | | | | |
| 35 | 3 | 2 | 1 | 0 |
| 36 | 4 | 2 | 1 | 0 |

Table 1: positions of the antennas illustrated in Figure 5

| PF | PCM | POS | Tag identifiers |
|---|---|---|---|
| 1 | 1 | 1 | 5715, 1245, 4325, 7658 |
| 1 | 1 | 2 | - |
| 1 | 1 | 3 | 6274, 1152, 9389 |
| 1 | 1 | 4 | 1024 |
| 1 | 2 | 1 | - |
| 1 | 2 | 2 | 1854, 8626, 3721, 7192, 2431, 2993 |
| ... | | | |
| 2 | 1 | 1 | 9035, 4591 |
| ... | | | |

Table 2: local database storing antenna positions and identified tag identifiers

| LPS | PF | PCM | POS | Tag identifiers |
|---|---|---|---|---|
| 1 | 1 | 1 | 1 | 5715, 1245, 4325, 7658 |
| 1 | 1 | 1 | 2 | - |
| 1 | 1 | 1 | 3 | 6274, 1152, 9389 |
| 1 | 1 | 1 | 4 | 1024 |
| 1 | 1 | 2 | 1 | - |
| 1 | 1 | 2 | 2 | 1854, 8626, 3721, 7192, 2431, 2993 |
| … | | | | |
| 1 | 2 | 1 | 1 | 9035, 4591 |
| … | | | | |

## Table 3: database of a central processing system storing antenna positions and identified tag identifiers

**Claims**

1. A method of managing stocks of items stored in pieces of furniture in facilities, wherein:

   - a respective radio frequency tag is attached to each of said items,
   - said items are disposed in a set of pieces of furniture (200) in each facility,
   - each of said set of pieces furniture is equipped with a plurality of antennas connected to at least one processing system (230) comprising a radio frequency tag reader (245),
   the method comprising the following steps:
   - determining (1102) first numbers of items disposed in each piece of furniture, based on a detection, by the antennas of each piece of furniture, of radio frequency tags in their respective vicinities,
   - determining (1104) a total second number of items stored in the facility based on said first numbers,
   - transmitting (1107) stock information to a stock management system for supplying said pieces of furniture, said stock information enabling said stock management system to trigger supply of the facilities for meeting respective needs of each facility for items.

2. A method according to claim 1, wherein said first and/or second numbers are determined in real-time.

3. A method according to claim 1, wherein said first and/or second numbers are regularly determined.

4. A method according to any one of the preceding claims, further comprising a step of receiving a request for stock information from said stock management system, and wherein said stock information is transmitted in response to said request.

3. A method according to any one of the preceding claims, wherein said stock information is regularly transmitted to said stock management system.

4. A method according to any one of the preceding claims, wherein said stock information is transmitted over a public telecommunication network.

5. A method according to any one the preceding claims, wherein said first and second numbers are determined for types of items, and wherein the stock information enables to trigger supply of the facilities for meeting respective needs of each facility for items

6. A method according to any one of the preceding claims, wherein said stock information comprises first localization information for localizing the items in the corresponding piece of furniture.

**7.** A method according to any one of the preceding claims, wherein said stock information comprises second localization information for localizing the facility from which it originates.

**8.** A method according to any one of the preceding claims, wherein said step of determining said first number is performed by each local processing system associated with a set of pieces of furniture.

**9.** A method according to any one of the preceding claims, wherein said step of determining said second total number and/ or said step of transmitting said stock information is performed, in each facility, by a central processing unit (410) to which are connected each processing system.

**10.** A computer program comprising instructions for carrying out each step of the method according to any one of claims 1 to 9 when the program is loaded and executed by a programmable apparatus.

**11.** A system for managing stocks of items stored in pieces of furniture in facilities configured to implement a method according to any one of claims 1 to 9.

Fig. 1
(prior art)

Fig. 2

Fig. 3

EP 2 908 276 A1

Fig. 4

EP 2 908 276 A1

Fig. 5a

Fig. 5b

Fig. 6

Fig. 7

EP 2 908 276 A1

i = j = k = 1 _____ 800

Interrogating Ant(PF[i],PCM[j],POS[k])
Storing tag identifiers and positions _____ 805

k++
k>NBAnt(PF[i],PCM[j])? — no
↓ yes
810

j++
j>NBPCM(PF[i])? — no
↓ yes
815

i++
i>NBPF? — no
yes
820

825

timer

830

Inventory request
received? — no
↓ yes

Transmitting tags
identifiers and positions

835

**Fig. 8a**

i =1 _____ 850

Interrogating LPS[i]
Storing LPS[i], tag identifiers and
positions in TagDB _____ 855

i++
i>NBLPS? — no
↓ yes
860

865
timer

870

Item position
request received? — no
↓ yes

875
Determining tag ID

Obtaining LPSID and
position from tag ID in
TagDB
880

Obtaining LPSID
position from
implantation map
885

Determining and
transmitting item position
in implantation map
890

**Fig. 8b**

Fig. 9

| # | FAC | LOC | TYP | NBR |
|---|-----|-----|-----|-----|
|   |     |     |     |     |
|   |     |     |     |     |
| ⋮ | ⋮ | ⋮ | ⋮ | ⋮ |
|   |     |     |     |     |

1005 →

1000  1001  1002  1003  1004

## Fig. 10

1100

UPDATE NBR ITEMS ? → NO

YES

I = 1 — 1101

1102 — DET NBR ITEMS PF(i)

1108

1103 — i = NBPF ? → NO → I + + 

YES

DET TOTAL NBR — 1104

GEN STCK INFO — 1105

1106 — TRANS STCK INFO ? → NO

YES

COM — 1107

## Fig. 11

## EUROPEAN SEARCH REPORT

Application Number

EP 14 30 5208

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | EP 2 597 594 A1 (HMY GROUP [FR]) 29 May 2013 (2013-05-29) * paragraphs [0002], [0012], [0013], [0019], [0022] - [0024], [0027], [0033], [0075] * ----- | 1-11 | INV. G06Q10/08 |

TECHNICAL FIELDS SEARCHED (IPC)

G06Q

The present search report has been drawn up for all claims

| Place of search | Date of completion of the search | Examiner |
|---|---|---|
| The Hague | 15 May 2014 | Lutz, Andreas |

EPO FORM 1503 03.82 (P04C01)

## ANNEX TO THE EUROPEAN SEARCH REPORT
## ON EUROPEAN PATENT APPLICATION NO.

EP 14 30 5208

This annex lists the patent family members relating to the patent documents cited in the above-mentioned European search report.
The members are as contained in the European Patent Office EDP file on
The European Patent Office is in no way liable for these particulars which are merely given for the purpose of information.

15-05-2014

| Patent document cited in search report | Publication date | Patent family member(s) | Publication date |
|---|---|---|---|
| EP 2597594 A1 | 29-05-2013 | NONE | |

EPO FORM P0459

For more details about this annex : see Official Journal of the European Patent Office, No. 12/82

**EP 2 908 276 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2597595 A
- EP 2597594 A
- EP 2597593 A